# FASCICULE DE BREVET EUROPEEN

(11) **EP 3 427 006 B1**
(45) Date de publication et mention de la délivrance du brevet: **01.04.2020**
(21) Numéro de dépôt: 17704509.3
(22) Date de dépôt: 16.02.2017
(51) Int. Cl.: G01B 11/12, G01B 11/00, G01B 11/24, G01B 5/00, G02B 23/24, G02B 23/26, G01N 21/954

(54) **DISPOSITIF DE CONTRÔLE TRIDIMENSIONNEL SANS CONTACT D'UNE PIÈCE CREUSE À SURFACE INTERNE DE RÉVOLUTION ET PROCÉDÉ CORRESPONDANT**
VORRICHTUNG ZUR BERÜHRUNGSLOSEN DREIDIMENSIONALEN PRÜFUNG EINES HOHLEN BAUTEILS MIT EINER INNEREN UMDREHUNGSFLÄCHE UND ENTSPRECHENDES VERFAHREN
DEVICE FOR CONTACTLESS THREE-DIMENSIONAL INSPECTION OF A HOLLOW PART WITH AN INNER SURFACE OF REVOLUTION, AND CORRESPONDING METHOD

(30) Priorité: 23.02.2016 FR 1651475
(43) Date de publication de la demande: 16.01.2019
(73) Titulaire: Mesure-Systems3D, 35170 Bruz (FR)
(72) Inventeur: LE NEEL, Didier, 35770 Vern-sur-Seiche (FR); SAMSON, Gwénaël, 35000 Rennes (FR); PICARD, Rémy, 35170 Bruz (FR)
(74) Mandataire: Vidon Brevets & Stratégie
(86) Numéro de dépôt international: PCT/EP2017/053534
(87) Numéro de publication internationale: WO 2017/144347

(56) Documents cités:
- EP-A1- 2 384 851
- EP-A1- 2 385 339
- JP-A- 2000 321 034
- US-A1- 2007 153 296

## Description

### 1. Domaine de l'invention

La présente invention concerne le domaine général de la mesure dimensionnelle de pièces mécaniques de différents types.

L'invention concerne plus particulièrement le contrôle d'alésages / de pièces creuses à surface interne de révolution.

### 2. Solutions de l'art antérieur

Certains domaines industriels tels que l'aéronautique, l'automobile, l'horlogerie ... imposent que chaque pièce composant une structure soit réalisée avec une très grande précision dans ses dimensions ou sa forme, et de qualité convenable et constante.

Il est donc nécessaire de prévoir un contrôle dimensionnel de chacune de ces pièces afin de savoir si elles respectent bien les tolérances de fabrication requises. Un tel contrôle est généralement effectué sur la chaine de fabrication.

De façon connue, ce contrôle peut être effectué manuellement par un opérateur. Toutefois, l'inspection visuelle des pièces ne répond ni aux cadences de production élevées, ni aux exigences de qualité de certains domaines industriels, l'aéronautique et l'automobile notamment, certains défauts restant difficilement repérables à l'œil nu.

On connaît également des méthodes mécaniques de contrôle automatisé, telles que les dispositifs de palpation, pour acquérir les dimensions et la forme d'une pièce, puis les contrôler. Toutefois, ces dispositifs de palpation sont complexes, peu flexibles et mal adaptés à des pièces de petites dimensions. En outre, le temps nécessaire au relevé des points de la pièce à contrôler par le palpeur est relativement important.

Il existe également des machines de contrôle tridimensionnel sans contact conçues spécifiquement pour mesurer les géométries internes. Ces machines permettent de contrôler directement sur la ligne de production ou en bord de ligne tous types de formes internes « non-débouchantes » ou « débouchantes », tels que des taraudages, alésages, forages avec des incertitudes de mesure de l'ordre de 1 µm.

Par exemple, certaines de ces machines mettent en œuvre des capteurs confocaux avec rotation intégrée, de façon à effectuer une mesure circulaire, sans contact, notamment du diamètre dans les alésages et les cavités. En revanche, un inconvénient de ces machines réside dans le fait que la connexion tournante qui transmet le signal optique ne permet de récupérer qu'une faible intensité de lumière, réduisant grandement la qualité et la rapidité des acquisitions de mesure.

Le document EP 2'385'339 A1 propose un dispositif de contrôle 3D ayant une telle connexion tournante, mais divulgue également une solution alternative utilisant un tambour d'enroulage d'un câble optique qui n'autorise cependant qu'un faible nombre de tours du capteur.

Il existe donc un besoin pour une machine permettant de contrôler de façon précise, reproductible et rapide des pièces creuses à surface interne de révolution.

### 3. Exposé de l'invention

L'un des objectifs de l'invention est donc de remédier à au moins certains de ces inconvénients en proposant un dispositif de contrôle tridimensionnel sans contact d'une pièce creuse à surface interne de révolution, dite pièce creuse à contrôler, ledit dispositif, tel que défini par la revendication indépendante 1, comprenant :
- une tête de mesure comprenant :
   ∘ un capteur confocal raccordé à un câble optique de collecte de données et destiné à inspecter, par un mouvement simultané de rotation et de translation, la surface interne de la pièce creuse à contrôler ;
   ∘ un tambour d'enroulage du câble optique ;
- un module d'enroulage et de déroulage du câble optique sur le tambour d'enroulage, le module d'enroulage et de déroulage étant synchronisé, via un moteur d'enroulage et de déroulage, avec la tête de mesure pour la rotation du capteur confocal ;
- un module de mouflage et de stockage du câble optique, relié au module d'enroulage et de déroulage par le câble optique.

Ainsi, l'invention présente, selon ses différents modes de réalisation, une solution nouvelle et inventive pour le contrôle tridimensionnel sans contact de pièce creuse à surface interne de révolution, permettant de bénéficier de manière optimale des performances (précision, qualité de mesure, rapidité ...) d'un capteur confocal (par exemple un capteur confocal à codage chromatique ou un capteur confocal interférométrique), grâce à l'utilisation d'une très grande longueur de câble optique, par exemple une fibre optique.

En effet, l'utilisation optimale d'un tel capteur confocal pour un tel contrôle nécessite que ce dernier effectue généralement, pour le contrôle d'une pièce, une cinquantaine de tours pendant son déplacement vertical descendant et une cinquantaine de tours dans l'autre sens pendant son déplacement vertical en remontée. Or, non seulement le câble optique (fibre optique) auquel est raccordé le capteur confocal, doit suivre le mouvement de ce dernier, sans se torsader ni s'étirer, mais ce câble optique doit également présenter une longueur suffisante pour que le capteur confocal puisse effectuer tous ces tours.

C'est donc grâce à une gestion astucieuse du déplacement (enroulage et déroulage) et du stockage du câble optique de grande longueur que le dispositif selon l'invention permet au câble optique de suivre le mouvement (en translation et/ou en rotation) du capteur confocal tout en conservant une chaine continue de câble optique au cours du contrôle de la pièce. Le processus de contrôle s'en trouve donc amélioré (rapidité et qualité des mesures).

Pour ce faire, le dispositif selon l'invention présente les trois parties principales suivantes :
- la tête de mesure, permettant l'acquisition de données de mesure proprement dites. Cette tête de mesure comprend notamment le capteur confocal et des moyens de mesure de son déplacement en translation et en rotation (par exemple un palpeur et un codeur angulaire), ainsi qu'un tambour d'enroulage/déroulage du câble optique. Ainsi, les données acquises par le capteur confocal sont synchronisées avec le palpeur et le codeur angulaire pour fournir un nuage de points en trois dimensions des formes intérieures de la pièce à contrôler ;
- un module d'enroulage/déroulage du câble optique, permettant au câble optique de pouvoir effectuer les tours nécessaires à l'acquisition des données par le capteur confocal, sans que ce câble ne s'étire, ne se torde ou ne s'emmêle ;
- un module de mouflage/stockage du câble optique, permettant d'emmagasiner, de redistribuer et de maintenir tendu le câble optique selon les besoins de la mesure.

Selon les différents modes de réalisation de l'invention, les modules d'enroulage/déroulage et de mouflage/stockage du câble optique permettent ainsi l'utilisation d'une grande longueur de câble optique (environ vingt mètres pour quarante cinq tours effectués par le capteur confocal) pour tirer partie de manière optimale de l'utilisation d'un tel capteur confocal.

Contrairement aux solutions existantes, le dispositif selon l'invention permet donc de déterminer un nuage de points de mesure de la pièce en trois dimensions sur l'ensemble de sa surface interne, de manière optimale en terme de précision et de rapidité notamment.

Selon un aspect particulier de l'invention, le moteur d'enroulage et de déroulage du module d'enroulage et de déroulage est relié respectivement à des premiers moyens d'entrainement en rotation du capteur confocal et du câble optique et à des deuxièmes moyens d'entrainement, synchronisés avec les premiers moyens d'entrainement, d'un ensemble d'enroulage et de déroulage du câble optique.

Ainsi, selon ce mode de réalisation, le module d'enroulage/déroulage du câble optique comprend plus particulièrement un moteur d'enroulage entrainant, de manière synchronisée, à la fois le capteur confocal (en rotation) et le câble optique lui-même (en enroulage/déroulage autour du tambour), ainsi qu'un ensemble d'enroulage/déroulage particulier permettant ensuite le mouflage et le stockage du câble optique.

Le moteur entraine donc le capteur confocal et le câble optique dans une même rotation, permettant ainsi au capteur d'effectuer tous les déplacements nécessaires à l'acquisition optimale des données de mesure de la pièce.

De plus, au fur et à mesure de la rotation du capteur confocal, le câble optique est maintenu toujours tendu et disponible, de manière optimale, grâce aux deuxièmes moyens d'entrainement (par exemple une courroie) d'un ensemble d'enroulage/déroulage relié au module de mouflage et de stockage décrits plus en détails ci-après.

Selon une caractéristique particulière, les premiers moyens d'entrainement correspondent à une courroie et un coupleur de rotation entre le capteur confocal et le câble optique.

Ainsi, selon ce mode de réalisation, les premiers moyens d'entrainement relié au moteur du module d'enroulage/déroulage permettent d'entrainer de manière synchronisée le capteur et le câble, pour maintenir ce dernier disponible quelque soit le mouvement du capteur. Ces premiers moyens d'entrainement correspondent par exemple d'une part à une courroie reliée au tambour d'enroulage et d'autre part à un coupleur de rotation (encore appelé doigt d'entrainement en rotation) entre le capteur et le câble optique.

Par exemple, l'ensemble d'enroulage et de déroulage du câble optique comprend un réa et des moyens de translation du réa.

Ainsi, selon ce mode de réalisation, l'ensemble d'enroulage/déroulage (entrainé par les deuxièmes moyens d'entrainement (par exemple une courroie) reliés au moteur) permet de rendre le câble optique disponible pour son enroulement autour du tambour et permet son enroulement organisé autour du tambour.

Par exemple, l'ensemble d'enroulage/déroulage comprend un réa entrainé en translation par des moyens particuliers, tels qu'un ensemble avec une vis à bille (ou une vis simple, encore appelée vis mère) et un écrou à bille.

Selon un aspect particulier, lorsque le réa est entrainé en descente par les moyens de translation, le câble optique s'enroule autour du tambour d'enroulage, dans un sens d'enroulage E, et lorsque le réa est entrainé en montée par les moyens de translation, le câble optique se déroule du tambour d'enroulage, dans un sens de déroulage D.

Ainsi, selon ce mode de réalisation, l'ensemble d'enroulage/déroulage (entrainé par les deuxièmes moyens d'entrainement (par exemple une courroie) reliés au moteur) et formé par exemple par un réa, une vis et un écrou, permet un enroulage/déroulage régulier et organisé autour du tambour.

De plus, lorsque le câble optique se déroule du tambour, l'ensemble d'enroulage/déroulage permet de fournir, toujours de manière organisée, le câble au module de mouflage/stockage, lequel peut ensuite, lorsque le câble optique doit être enroulé autour du tambour, distribuer de manière régulière le câble optique.

Par exemple, la vis à bille, en tournant dans un sens (selon le sens d'entrainement du moteur d'enroulage/déroulage), entraine en descente le réa, de façon à ce que le câble optique s'enroule autour du tambour de haut en bas, et la vis à bille, en tournant dans l'autre sens, entraine en montée le réa, de façon à ce que le câble optique se déroule du tambour de bas en haut.

Selon une caractéristique particulière, le module de mouflage et de stockage comprend une première pluralité de réas présentant un axe fixe, dite pluralité de réas fixes, et une deuxième pluralité de réas présentant un axe mobile, dite pluralité de réas mobiles, les pluralités de réas fixes et mobiles étant reliées par le câble optique tendu, et la pluralité de réas mobiles est entrainée en translation par les mouvements d'enroulage et de déroulage du câble optique.

Ainsi, selon ce mode de réalisation, le dispositif selon l'invention permet de stocker et de redistribuer, via le module d'enroulage/déroulage, le câble optique de manière optimale, grâce au module de mouflage/stockage, tout en le maintenant tendu en permanence pour que son utilisation soit optimale.

Pour ce faire, le module de mouflage/stockage présente deux jeux (ou trains, ou ensembles) de réas reliés entre eux par le câble optique maintenu tendu, dont un premier jeu présente des réas avec un axe fixe et un deuxième jeu présente des réas avec un axe mobile, ainsi qu'un contrepoids (ou un autre système de tension tel qu'un ressort ou un vérin pneumatique) permettant précisément de maintenir le câble optique tendu.

Par exemple, lorsque le câble optique est entièrement enroulé sur le tambour, le jeu de réas mobiles se trouve en position haute et descend au fur et à mesure du déroulage du câble optique du tambour.

L'invention concerne également un procédé de contrôle tridimensionnel sans contact d'une pièce creuse à surface interne de révolution, dite pièce creuse à contrôler, ledit procédé, tel que défini par la revendication indépendante 7, comprenant une étape d'activation d'un moteur d'enroulage et de déroulage déclenchant, de manière synchronisée, les étapes suivantes :
- déplacement simultané en translation et en rotation d'un capteur confocal raccordé à un câble optique de collecte de données ;
- acquisition, par le capteur confocal, de données de mesure en trois dimensions des formes intérieures de la pièce creuse ;
- activation d'un module d'enroulage et de déroulage mettant en œuvre les sous-étapes suivantes, de manière synchronisée :
   ∘ enroulage ou déroulage du câble optique autour d'un tambour ;
   ∘ entrainement d'un ensemble d'enroulage et de déroulage du câble optique ;
- stockage ou distribution du câble optique par un module de mouflage et de stockage.

Ainsi, selon ce mode de réalisation, l'invention concerne également un procédé de contrôle tridimensionnel sans contact d'une pièce creuse à surface interne de révolution, permettant d'utiliser un capteur confocal dans des conditions optimales, c'est-à-dire avec une grande longueur de câble optique, sans que celui-ci ne se torde ou ne s'étire, grâce à l'activation d'un moteur d'enroulage et de déroulage et d'un système mécanique particulier d'enroulage/déroulage du câble et de mouflage/stockage du câble.

En effet, ce moteur d'enroulage et de déroulage permet d'entrainer, de manière synchronisée :
- le capteur confocal en translation et rotation (de manière indépendante) ;
- un module d'enroulage/déroulage du câble optique permettant d'enrouler/dérouler régulièrement le câble autour du tambour ;
- un module de mouflage/stockage du câble optique permettant, via le module d'enroulage/déroulage, de stocker correctement le câble optique au fur et à mesure de son déroulage du tambour, de distribuer de manière régulière le câble optique pour son enroulage correct autour du tambour et de le maintenir tendu ;
tout en permettant l'acquisition des données par le capteur confocal.

### 4. Liste des figures

D'autres caractéristiques et avantages de l'invention apparaîtront à la lecture de la description suivante, donnée à titre d'exemple indicatif et non limitatif, et des dessins annexés, dans lesquels :
- la figure 1 représente une vue du dispositif de contrôle tridimensionnel sans contact, selon un mode de réalisation particulier de l'invention ;
- la figure 2 illustre plus particulièrement certains éléments de liaison entre la tête de mesure et le module d'enroulage/déroulage, dans le dispositif de contrôle tridimensionnel sans contact du mode de réalisation de la figure 1 ;
- la figure 3 illustre plus particulièrement certains éléments du module d'enroulage/déroulage, dans le dispositif de contrôle tridimensionnel sans contact du mode de réalisation de la figure 1;
- les figures 4a et 4b illustrent plus particulièrement le fonctionnement du module d'enroulage/déroulage, dans le dispositif de contrôle tridimensionnel sans contact du mode de réalisation de la figure 1;
- la figure 5 illustre plus particulièrement le fonctionnement du module de mouflage/stockage, dans le dispositif de contrôle tridimensionnel sans contact du mode de réalisation de la figure 1 ;
- les figures 6a et 6b illustrent le fonctionnement conjoint des modules d'enroulage/déroulage et de mouflage/stockage, dans le dispositif de contrôle tridimensionnel sans contact du mode de réalisation de la figure 1.

### 5. Description détaillée

Sur toutes les figures du présent document, les éléments et étapes identiques sont désignés par une même référence numérique.

### 5.1 Principe général

Le principe général de l'invention repose sur un système mécanique permettant l'enroulage et le stockage de la grande longueur de câble optique (par exemple une fibre optique) nécessaire à une utilisation optimale d'un capteur confocal (à codage chromatique ou interférométrique), pour le contrôle tridimensionnel sans contact de pièces creuses à surface interne de révolution.

Ainsi, contrairement aux techniques existantes de capteurs confocaux à rotation intégrée, dont la connexion tournante transmettant le signal optique ne permet de récupérer qu'une faible intensité de lumière, la solution de l'invention permet une utilisation optimale (rapide et précise) d'un capteur confocal, grâce à la possibilité d'utiliser une fibre optique de très grande longueur et de conserver une chaine continue de fibre optique pendant toute la durée de la mesure.

En effet, la principale difficulté mécanique dans un dispositif de contrôle de ce type réside dans la gestion de la fibre optique utilisée par le capteur confocal, qui va généralement effectuer une cinquantaine de tours dans un sens (par exemple en enroulage) et une cinquantaine de tours dans l'autre sens (par exemple en déroulage). Or il faut que la fibre optique suive le mouvement sans se torsader ni s'étirer.

Pour ce faire, la solution de l'invention met en œuvre, de façon synchronisée avec la tête de mesure proprement dite, une technique d'enroulage/déroulage de la fibre optique utilisée pendant la mesure, associée à une technique de mouflage/stockage de la fibre optique, assurant une utilisation optimale du capteur confocal.

### 5.2 Description d'un mode de réalisation

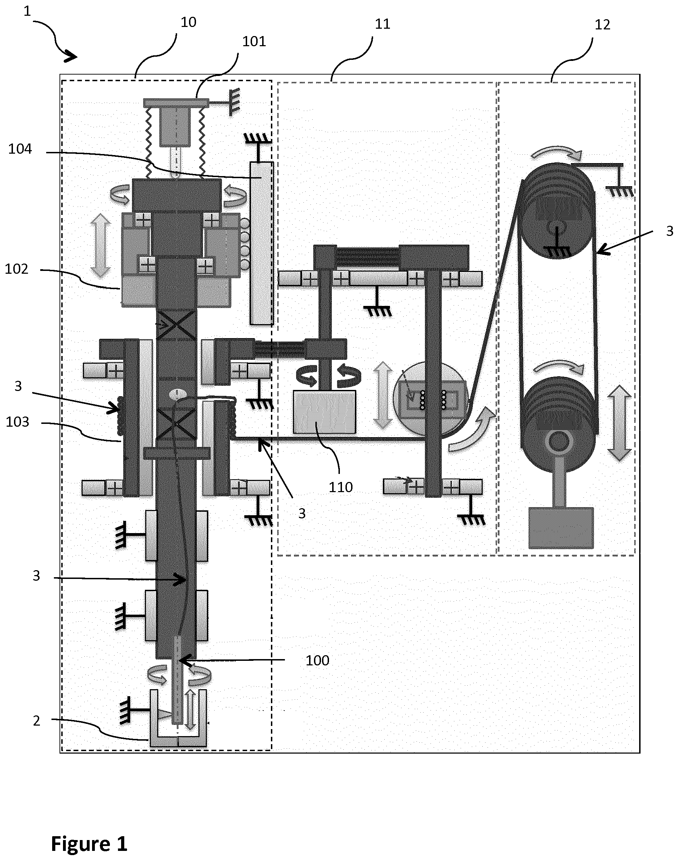

On présente en relation avec les **figures 1** à **3****,** la structure et le fonctionnement d'un dispositif 1 de contrôle tridimensionnel sans contact, selon un mode de réalisation particulier de l'invention, adapté au contrôle de pièces creuses à surface interne de révolution par utilisation d'un capteur confocal à codage chromatique se déplaçant en translation et en rotation à l'intérieur de la pièce, afin de produire un nuage de points en trois dimensions correspondant aux formes intérieures de la pièce 2.

La figure 1 illustre un dispositif de contrôle 1 d'une pièce creuse 2, comprenant notamment les éléments de mesure suivants, intégrés dans une tête de mesure 10 :
- un capteur confocal 100 raccordé à un câble optique 3 de collecte de données, plus particulièrement une fibre optique dans ce mode de réalisation. Comme déjà indiqué, ce capteur confocal 100 est destiné à inspecter, par un mouvement simultané (bien qu'indépendant) de rotation et de translation, la surface interne de la pièce 2. Nous verrons par la suite que la rotation du capteur confocal est mise en œuvre par un moteur 110, et la translation du capteur est mise en œuvre par une table de translation 104 ;
- des moyens 101 de mesure de la translation du capteur confocal, par exemple sous la forme d'un palpeur qui permet de mesurer le déplacement vertical du capteur, dans un dispositif tel qu'illustré en figure 1 ;
- des moyens 102 de mesure de la rotation du capteur confocal, par exemple sous la forme d'un codeur angulaire, encore appelé codeur rotatif ou mesureur d'angle ;
- un tambour d'enroulage/déroulage 103 de la fibre optique, au fur et à mesure de la rotation du capteur au cours de la mesure.

Selon une technique connue et non décrite plus en détails ici, en synchronisant les acquisitions du capteur confocal avec le codeur rotatif et le palpeur, un nuage de points 3D est récupéré pour obtenir les formes intérieures de la pièce à mesurer.

Comme également illustré en figure 1, l'invention prévoit donc, selon ce mode de réalisation, un module d'enroulage et de déroulage 11 de la fibre optique 3 sur le tambour d'enroulage/déroulage 103, ainsi qu'un module de mouflage/stockage 12 de la fibre optique 3, relié au module d'enroulage/déroulage par la fibre optique 3.

Plus particulièrement, le module d'enroulage et de déroulage 11 est synchronisé, via un moteur d'enroulage et de déroulage 110, avec la tête de mesure 10 pour permettre la rotation du capteur confocal 100 en même temps que l'enroulage/déroulage de la fibre optique.

Selon une première variante, le capteur confocal 100 peut effectuer un nombre prédéterminé de tours (par exemple entre quarante et cinquante tours) pour un cycle de mesure d'une première pièce à contrôler et effectuer le même nombre de tours en sens inverse pour un cycle de mesure pour une deuxième pièce à contrôler.

Selon une deuxième variante, le capteur effectue ses mesures à la fois pendant les tours d'enroulage de la fibre optique et pendant les tours de déroulage de la fibre optique, et ce pour chaque pièce à contrôler.

De manière générale, plus le nombre de rotations pouvant être effectuées par le capteur est important, et plus la mesure de la pièce est optimale, en terme de temps de cycle et de qualité de la mesure. Or, plus le nombre de rotations effectuées par le capteur est important, et plus la longueur de la fibre optique doit être importante, ce qui rend particulièrement efficace la solution de l'invention, selon ses différents modes de réalisation, pour une mesure optimale.

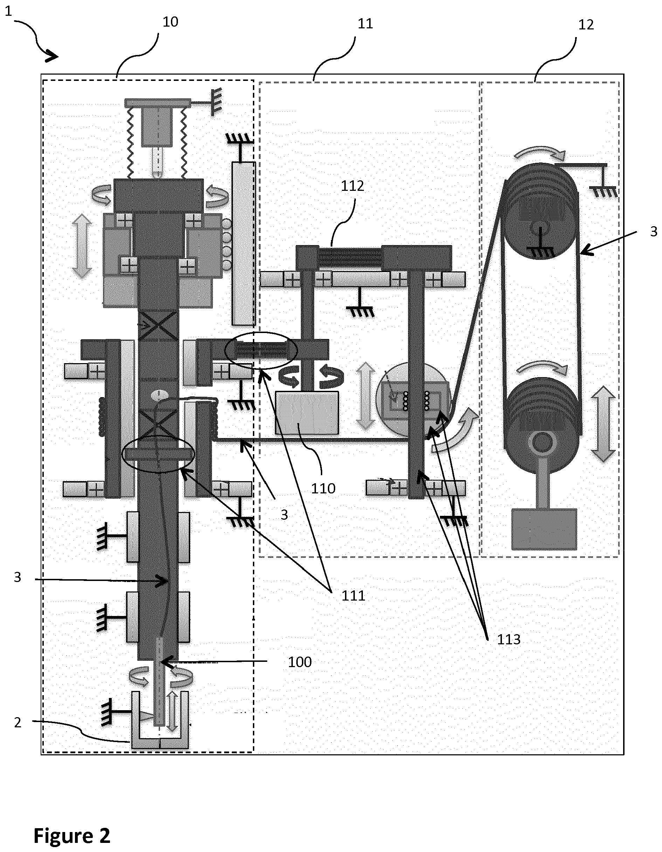

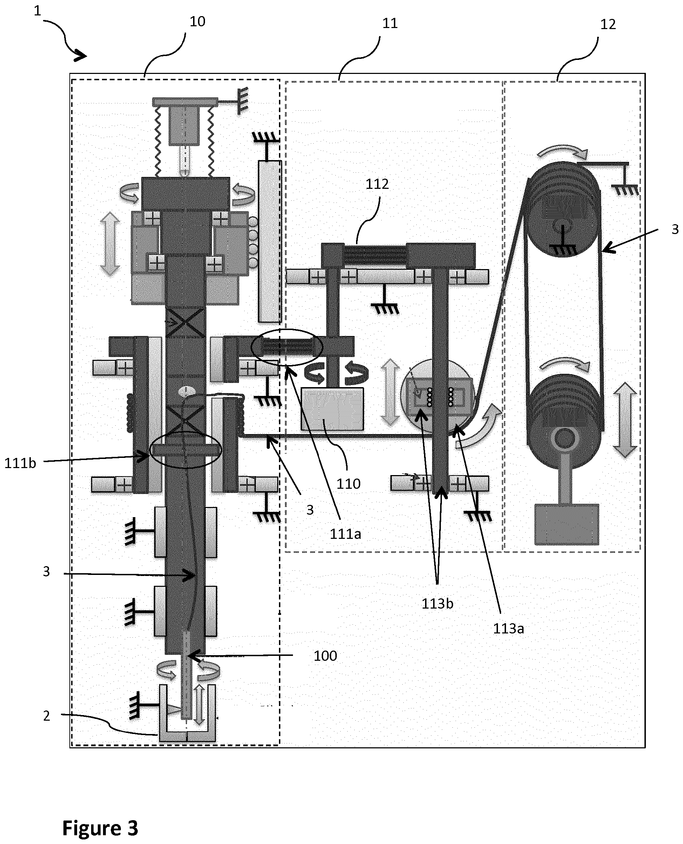

On décrit maintenant, en relation avec les figures 2 et 3, le module d'enroulage et de déroulage 11 du dispositif 1 de contrôle.

Comme déjà indiqué, le moteur d'enroulage et de déroulage 110 du module d'enroulage et de déroulage 11 fait à la fois tourner le capteur confocal 100 et la fibre optique 3, via des premiers moyens d'entrainement 111. Par exemple, ces premiers moyens d'entrainement 111 correspondent à une courroie 111a et un coupleur de rotation 111b.

De plus, le moteur d'enroulage et de déroulage 110 est également relié à des deuxièmes moyens d'entrainement 112, synchronisés avec les premiers moyens d'entrainement 111, d'un ensemble 113 d'enroulage et de déroulage de la fibre optique 3.

Par exemple, les deuxièmes moyens d'entrainement correspondent à une deuxième courroie et l'ensemble 113 d'enroulage et de déroulage correspond à une vis à bille associée à un écrou à bille, notés 113b, et un réa 113a (comme illustré en figure 3).

Ainsi, le moteur 110 (qui fait tourner le capteur confocal 100) fait également tourner la vis à bille, qui elle-même permet de faire monter et descendre de façon synchronisée le réa 113a, via l'écrou à bille.

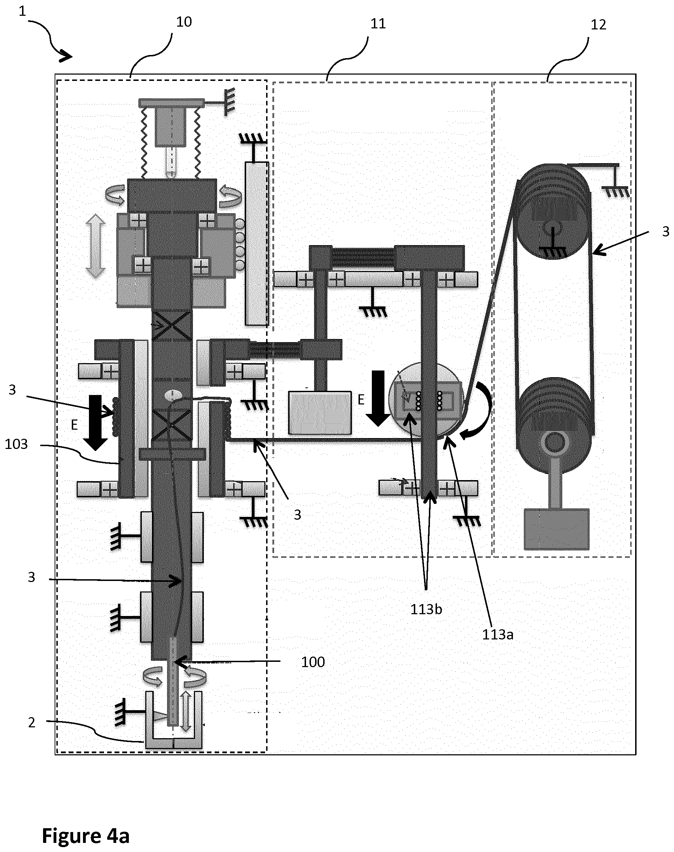

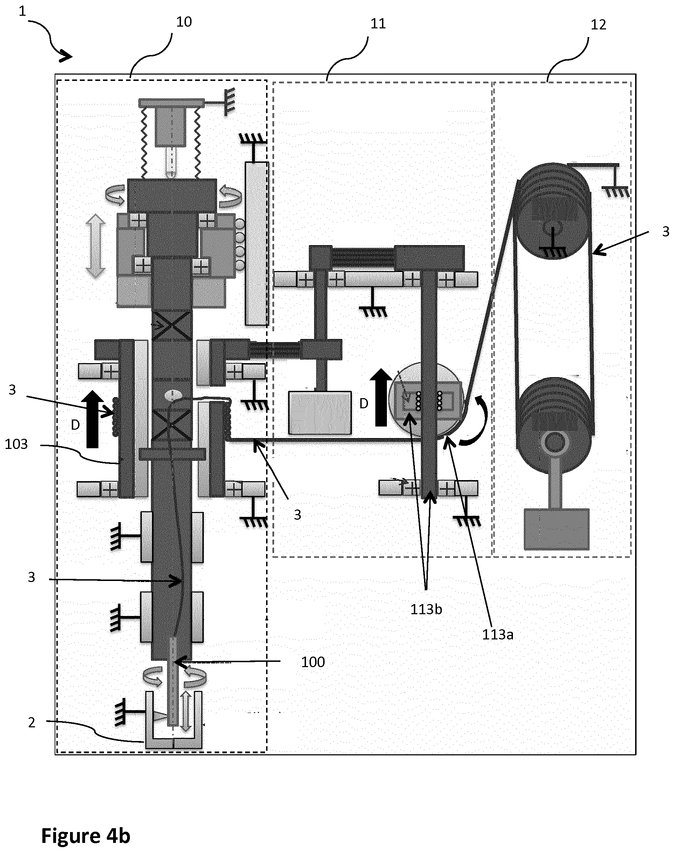

De cette manière, la fibre optique 3 entrainée par le capteur confocal 100 en rotation est gérée par un ensemble mécanique permettant son enroulage et son déroulage réguliers, comme illustré en figures 4a et 4b.

Ainsi, la figure 4a illustre le sens d'enroulage E de la fibre optique 3 sur le tambour 103, grâce à la descente du réa 113a (cette descente étant elle-même mise en œuvre grâce à l'ensemble 113b comprenant la vis à bille qui tourne et l'écrou à bille associé). Cet assemblage permet ainsi de faire s'enrouler la fibre autour du tambour de façon régulière dans son sens d'enroulage E, par exemple du haut vers le bas.

De même, comme illustré en figure 4b, la remontée du réa 113a (cette remontée étant également mise en œuvre grâce à l'ensemble 113b comprenant la vis à bille qui tourne et l'écrou à bille associé) permet de faire se dérouler la fibre optique du tambour de manière régulière dans son sens de déroulage D, par exemple du bas vers le haut.

Par ailleurs, ce mode de réalisation de l'invention prévoit également un module de mouflage et de stockage 12 permettant de redistribuer et de stocker la fibre optique, régulièrement, en conservant la fibre optique tendue grâce à un système de tension (par exemple un contrepoids, un ressort ou un vérin pneumatique).

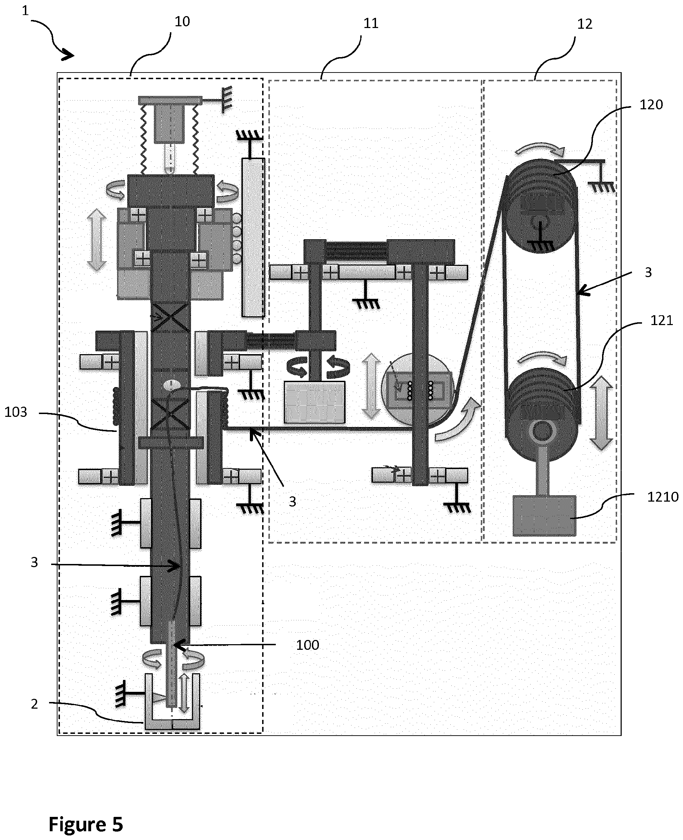

Par exemple, comme illustré en figure 5, le module de mouflage et de stockage 12 comprend une première pluralité de réas 120 présentant un axe fixe, appelée pluralité de réas fixes (ou train de réas fixes), et une deuxième pluralité de réas 121 présentant un axe mobile, appelée pluralité de réas mobiles (ou train de réas mobiles). Selon ce mode de réalisation, les trains de réas fixes et mobiles sont reliés par la fibre optique 3 maintenue tendue grâce à un contrepoids 1210 relié au train de réas mobiles.

De plus, le module de mouflage et de stockage 12 est relié au module d'enroulage/déroulage 11 par la fibre optique 3, le train de réas mobiles 121 étant entrainé en translation par les mouvements d'enroulage et de déroulage de la fibre optique.

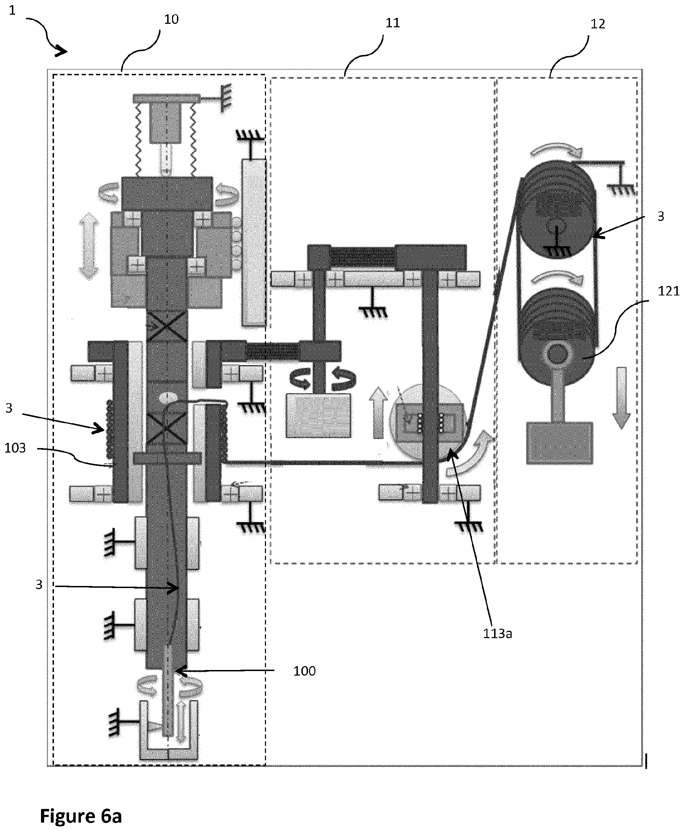

La figure 6a illustre plus particulièrement un état du dispositif 1 dans lequel la fibre optique 3 est entièrement enroulée autour du tambour 103, le réa 113a se trouvant en position basse, et le train de réas mobiles 121 se trouvant en position haute.

Au fur et à mesure du déroulage de la fibre optique 3 du tambour 103, le réa 113a remonte (grâce à l'ensemble d'enroulage/déroulage 113 et au moteur 110) et le train de réas mobiles 121 descend, ce qui est illustré par les flèches de direction du réa 113a et du train de réas mobiles 121.

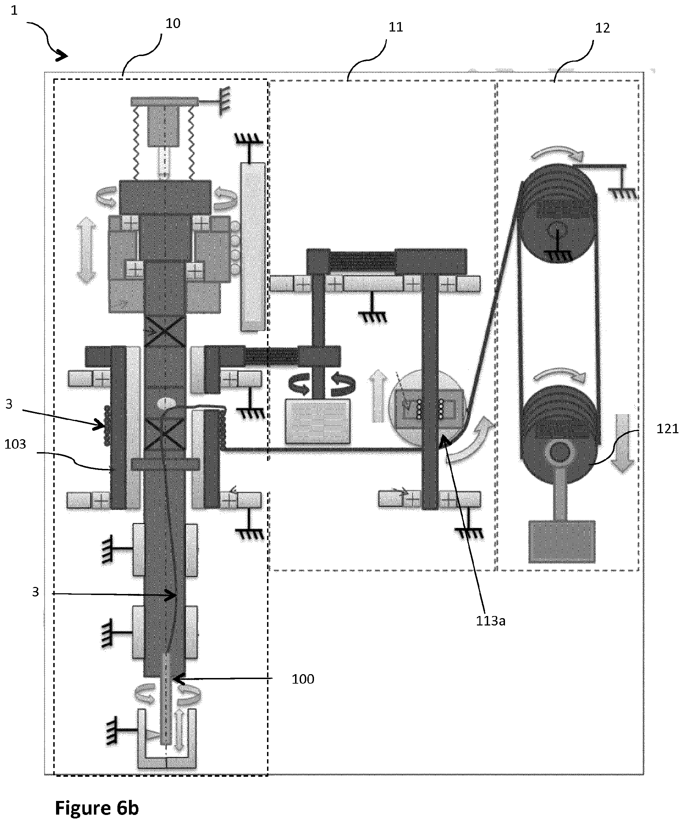

Cet état, en cours de déroulage, est illustré par exemple en figure 6b, où l'on peut voir qu'il y a moins de tours de fibre optique 3 sur le tambour 103, que le réa 113a est en train de remonter comme l'indique la flèche de direction associée et que le train de réas mobiles 121 redescend, comme l'indique également la flèche de direction associée.

Ainsi, l'ensemble de mouflage/stockage permet à la fois de stocker (emmagasiner) la fibre optique et de la redistribuer, afin que la fibre optique puisse se dérouler et s'enrouler autour du tambour, tout en restant tendue grâce au contrepoids 1210.

De cette manière, il est possible de conserver une chaine continue de fibre optique tout au long de la mesure, quelle que soit la longueur de fibre optique utilisée et quel que soit le nombre de tours effectués par le capteur confocal, rendant ainsi optimale l'utilisation d'un capteur confocal pour la mesure tridimensionnelle sans contact de pièces creuses à surface interne de révolution.

### 5.3 Procédé de contrôle

L'utilisation d'un dispositif 1 de contrôle tel que décrit précédemment, selon les différents modes de réalisation de l'invention, permet donc la mise en œuvre d'un procédé de contrôle tridimensionnel sans contact d'une pièce creuse à surface interne de révolution, dite pièce creuse à contrôler, utilisant un capteur confocal (à codage chromatique ou interférométrique) et une grande longueur de fibre optique.

Pour ce faire, un procédé de contrôle comprend notamment une étape d'activation d'un moteur d'enroulage et de déroulage déclenchant, de manière synchronisée :
- le déplacement simultané en translation et en rotation du capteur confocal raccordé à la fibre optique de collecte de données ;
- l'acquisition, par le capteur confocal, de données de mesure en trois dimensions des formes intérieures de la pièce creuse ;
- l'activation d'un module d'enroulage et de déroulage mettant en œuvre de manière également synchronisée :
   ∘ l'enroulage (ou le déroulage) de la fibre optique autour d'un tambour ;
   ∘ l'entrainement d'un ensemble d'enroulage et de déroulage de la fibre optique ;
   ∘ pour la distribution (ou le stockage) de la fibre optique par un module de mouflage et de stockage.

Le procédé de contrôle selon l'invention, tel que défini par la revendication indépendante 7, permet donc d'obtenir des mesures tridimensionnelles de pièces creuses à surface interne de révolution, précises, rapides et reproductibles, grâce à l'utilisation optimale d'un capteur confocal associé à une grande longueur de fibre optique.

## Revendications

1. Dispositif (1) de contrôle tridimensionnel sans contact d'une pièce (2) creuse à surface interne de révolution, dite pièce creuse à contrôler, ledit dispositif comprenant:
• une tête de mesure (10) comprenant :
∘ un capteur confocal (100) raccordé à un câble optique (3) de collecte de données et destiné à inspecter, par un mouvement simultané de rotation et de translation, la surface interne de ladite pièce creuse à contrôler;
∘ un tambour d'enroulage (103) dudit câble optique (3);
• un module d'enroulage et de déroulage (11) dudit câble optique (3) sur ledit tambour d'enroulage (103), ledit module d'enroulage et de déroulage (11) étant synchronisé, via un moteur d'enroulage et de déroulage (110), avec ladite tête de mesure (10) pour ladite rotation dudit capteur confocal (100);
ledit dispositif étant **caractérisé en ce qu'**il comprend en outre :
• un module de mouflage et de stockage (12) dudit câble optique (3), relié audit module d'enroulage et de déroulage par ledit câble optique (3).

2. Dispositif (1) de contrôle tridimensionnel selon la revendication 1, **caractérisé en ce que** ledit moteur d'enroulage et de déroulage (110) dudit module d'enroulage et de déroulage (11) est relié respectivement à des premiers moyens d'entrainement (111) en rotation dudit capteur confocal (100) et dudit câble optique (3) et à des deuxièmes moyens d'entrainement (112), synchronisés avec lesdits premiers moyens d'entrainement (111), d'un ensemble (113) d'enroulage et de déroulage dudit câble optique (3).

3. Dispositif (1) de contrôle tridimensionnel selon la revendication 2, **caractérisé en ce que** lesdits premiers moyens d'entrainement (111) correspondent à une courroie (111a) et un coupleur de rotation (111b) entre ledit capteur confocal (100) et ledit câble optique (3).

4. Dispositif (1) de contrôle tridimensionnel selon la revendication 2 ou la revendication 3, **caractérisé en ce que** ledit ensemble d'enroulage et de déroulage (113) dudit câble optique comprend un réa (113a) et des moyens de translation (113b) dudit réa (113a).

5. Dispositif (1) de contrôle tridimensionnel selon la revendication 4, **caractérisé en ce que** :
• lorsque ledit réa (113a) est entrainé en descente par lesdits moyens de translation (113b), ledit câble optique (3) s'enroule autour dudit tambour d'enroulage (103), dans un sens d'enroulage E ;
• lorsque ledit réa (113a) est entrainé en montée par lesdits moyens de translation (113b), ledit câble optique (3) se déroule dudit tambour d'enroulage (103), dans un sens de déroulage D.

6. Dispositif (1) de contrôle tridimensionnel selon la revendication 1, **caractérisé en ce que** ledit module de mouflage et de stockage (12) comprend une première pluralité de réas (120) présentant un axe fixe, dite pluralité de réas fixes, et une deuxième pluralité de réas (121) présentant un axe mobile, dite pluralité de réas mobiles, lesdites pluralités de réas fixes et mobiles étant reliées par ledit câble optique (3) tendu,
et **en ce que** ladite pluralité de réas mobiles (121) est entrainée en translation par les mouvements d'enroulage et de déroulage dudit câble optique (3).

7. Procédé de contrôle tridimensionnel sans contact d'une pièce creuse à surface interne de révolution, dite pièce creuse à contrôler, **caractérisé en ce qu'**il comprend une étape d'activation d'un moteur d'enroulage et de déroulage déclenchant, de manière synchronisée, les étapes suivantes :
• déplacement simultané en translation et en rotation d'un capteur confocal raccordé à un câble optique de collecte de données ;
• acquisition, par ledit capteur confocal, de données de mesure en trois dimensions des formes intérieures de ladite pièce creuse ;
• activation d'un module d'enroulage et de déroulage mettant en œuvre les sous-étapes suivantes, de manière synchronisée :
∘ enroulage ou déroulage dudit câble optique autour d'un tambour;
∘ entrainement d'un ensemble d'enroulage et de déroulage dudit câble optique ;
• stockage ou distribution dudit câble optique par un module de mouflage et de stockage.

## Patentansprüche

1. Vorrichtung (1) zur kontaktlosen dreidimensionalen Prüfung eines Hohlkörpers (2) mit einer inneren Umfangsfläche, Prüfhohlkörper genannt, wobei die Vorrichtung umfasst:
• einen Messkopf (10), der umfasst:
∘ einen konfokalen Sensor (100), der an ein Datenerfassungs-Lichtwellenleiterkabel (3) angeschlossen ist und dazu bestimmt ist, durch eine gleichzeitige Dreh- und Translationsbewegung die Innenfläche des Prüfhohlkörpers zu inspizieren;
∘ eine Aufwickeltrommel (103) zum Aufwickeln des Lichtwellenleiterkabels (3);
• ein Auf- und Abwickelmodul (11) zum Auf- und Abwickeln des Lichtwellenleiterkabels (3) auf die Aufwickeltrommel (103), wobei das Auf- und Abwickelmodul (11) über einen Auf- und Abwickelmotor (110) mit dem Messkopf (10) zum Drehen des konfokalen Sensors (100) synchronisiert ist;
wobei die Vorrichtung **dadurch gekennzeichnet ist, dass** sie ferner umfasst:
• ein Flaschenzug- und Aufbewahrungsmodul (12) für das Lichtwellenleiterkabel (3), das mit dem Auf- und Abwickelmodul durch das Lichtwellenleiterkabel (3) verbunden ist.

2. Vorrichtung (1) zur dreidimensionalen Prüfung nach Anspruch 1, **dadurch gekennzeichnet, dass** der Auf- und Abwickelmotor (110) des Auf- und Abwickelmoduls (11) jeweils mit ersten Antriebseinrichtungen (111) zum rotatorischen Antreiben des konfokalen Sensors (100) und des Lichtwellenleiterkabels (3) und mit zweiten, mit den ersten Antriebseinrichtungen (111) synchronisierten Antriebseinrichtungen (112), einer Auf- und Abwickelanordnung (113) zum Auf- und Abwickeln des Lichtwellenleiterkabels (3) synchronisiert sind.

3. Vorrichtung (1) zur dreidimensionalen Prüfung nach Anspruch 2, **dadurch gekennzeichnet, dass** die ersten Antriebseinrichtungen (111) einem Riemen (111a) und einem Drehkoppler (111b) zwischen dem konfokalen Sensor (100) und dem Lichtwellenleiterkabel (3) entsprechen.

4. Vorrichtung (1) zur dreidimensionalen Prüfung nach Anspruch 2 oder Anspruch 3, **dadurch gekennzeichnet, dass** die Auf- und Abwickelanordnung (113) zum Auf- und Abwickeln des Lichtwellenleiterkabels eine Rolle (113a) und Translationseinrichtungen (113b) für die Rolle (113a) umfasst.

5. Vorrichtung (1) zur dreidimensionalen Prüfung nach Anspruch 4, **dadurch gekennzeichnet, dass**:
• wenn die Rolle (113a) von den Translationseinrichtungen (113b) abwärts angetrieben wird, das Lichtwellenleiterkabel (3) sich in einer Aufwickelrichtung E um die Aufwickeltrommel (103) aufwickelt;
• wenn die Rolle (113a) von den Translationseinrichtungen (113b) aufwärts angetrieben wird, das Lichtwellenleiterkabel (3) sich in einer Abwickelrichtung D von der Aufwickeltrommel (103) abwickelt.

6. Vorrichtung (1) zur dreidimensionalen Prüfung nach Anspruch 1, **dadurch gekennzeichnet, dass** das Flaschenzug- und Aufbewahrungsmodul (12) eine erste Mehrzahl von Rollen (120), mit einer ortsfesten Achse aufweist, Mehrzahl ortsfester Rollen genannt, und eine zweite Mehrzahl von Rollen (121), mit beweglicher Achse aufweist, Mehrzahl beweglicher Rollen genannt, umfasst, wobei die Mehrzahlen ortsfester und beweglicher Rollen durch das gespannte Lichtwellenleiterkabel (3) verbunden sind, und dadurch, dass die Mehrzahl beweglicher Rollen (121) durch die Auf- und Abwickelbewegungen des Lichtwellenleiterkabels (3) translatorisch angetrieben wird.

7. Verfahren zur kontaktlosen dreidimensionalen Prüfung eines Hohlkörpers mit einer inneren Umfangsfläche, Prüfhohlkörper genannt, **dadurch gekennzeichnet, dass** es einen Schritt des Aktivierens eines Auf- und Abwickelmotors umfasst, der auf synchronisierte Weise die folgenden Schritte auslöst:
• gleichzeitige Translations- und Drehbewegung eines konfokalen Sensors, der an ein Datenerfassungs-Lichtwellenleiterkabel angeschlossen ist;
• Aufnehmen von Messdaten in drei Dimensionen der inneren Formen des Hohlkörpers in drei Dimensionen mittels des konfokalen Sensors;
• Aktivieren eines Auf- und Abwickelmoduls, das die folgenden Teilschritte auf synchronisierte Weise ausführt:
∘ Aufwickeln oder Abwickeln des Lichtwellenleiterkabels auf eine beziehungsweise von einer Trommel;
∘ Antreiben einer Auf- und Abwickelanordnung zum Auf- und Abwickeln des Lichtwellenleiterkabels;
• Aufbewahrung oder Ausgabe des Lichtwellenleiterkabels durch ein Flaschenzug- und Aufbewahrungsmodul.

## Claims

1. Device (1) for contactless three-dimensional inspection of a hollow part (2) with an internal surface of revolution, known as the hollow part to be inspected, said device comprising:
• a measuring head (10) comprising:
∘ a confocal sensor (100) connected to an optical data collection cable (3) for inspecting, by a simultaneous rotational and translational movement, the inner surface of said hollow part to be inspected;
∘ a winding drum (103) of said optical cable (3);
• a winding and unwinding module (11) for winding and unwinding said optical cable (3) onto said winding drum (103), wherein said winding and unwinding module (11) is synchronised, via a winding and unwinding motor (110), with said measuring head (10) for said rotation of said confocal sensor (100); wherein said device is **characterised in that** it further comprises:
• a module (12) for reeving and storing said optical cable (3), connected to said winding and unwinding module by said optical cable (3).

2. Device (1) for three-dimensional inspection according to claim 1, **characterised in that** said winding and unwinding motor (110) of said winding and unwinding module (11) is connected respectively to first drive means (111) for driving said confocal sensor (100) and said optical cable (3) in rotation and to second drive means (112), synchronised with said first drive means (111), an assembly (113) for winding and unwinding said optical cable (3).

3. Device (1) for three-dimensional inspection according to claim 2, **characterised in that** said first drive means (111) corresponds to a belt (111a) and a rotation coupler (111b) between said confocal sensor (100) and said optical cable (3).

4. Device (1) for three-dimensional inspection according to claim 2 or 3, **characterised in that** said assembly (113) for winding and unwinding said optical cable comprises a sheave (113a) and translation means (113b) for said sheave (113a).

5. Device (1) for three-dimensional inspection according to claim 4, **characterised in that**:
• when said sheave (113a) is driven downwards by said translation means (113b), said optical cable (3) is wound around said winding drum (103), in a winding direction E ;
• when said sheave (113a) is driven upward by said translation means (113b), said optical cable (3) is unwound from said winding drum (103) in an unwinding direction D.

6. Device (1) for three-dimensional inspection according to claim 1, **characterised in that** said reeving and storage module (12) comprises a first plurality of sheaves (120) having a fixed axis, referred to as a plurality of fixed sheaves, and a second plurality of sheaves (121) having a mobile axis, referred to as a plurality of mobile sheaves, wherein said plurality of fixed and mobile sheaves are connected by said tensioned optical cable (3),
and **in that** said plurality of movable sheaves (121) is driven in translation by the winding and unwinding movements of said optical cable (3).

7. Method for the contactless three-dimensional inspection of a hollow part with an internal surface of revolution, known as the hollow part to be inspected, **characterised in that** it comprises a step of activating a winding and unwinding motor triggering, in a synchronised manner, the following steps :
• simultaneous translational and rotational movement of a confocal sensor connected to an optical data collection cable ;
• acquisition, by said confocal sensor, of three-dimensional measurement data of the internal shapes of said hollow part;
• activation of a winding and unwinding module implementing the following sub-steps in a synchronised manner :
∘ winding or unwinding said optical cable around a drum ;
∘ driving an assembly for winding and unwinding said optical cable;
• storage or distribution of said optical cable by a reeving and storage module.
